# EUROPÄISCHE PATENTSCHRIFT

(11) **EP 4 316 629 B1**
(45) Veröffentlichungstag und Bekanntmachung des Hinweises auf die Patenterteilung: **02.04.2025**
(21) Anmeldenummer: 23188862.9
(22) Anmeldetag: 01.08.2023
(51) Int. Cl.: B01D 46/14, B01D 46/42, B01D 46/64

(54) **SEKUNDÄRELEMENT UND FILTERSYSTEM**
SECONDARY ELEMENT AND FILTER SYSTEM
ÉLÉMENT SECONDAIRE ET SYSTÈME DE FILTRE

(30) Priorität: 05.08.2022 DE 102022119709
(43) Veröffentlichungstag der Anmeldung: 07.02.2024
(73) Patentinhaber: MANN+HUMMEL GmbH, 71636 Ludwigsburg (DE)
(72) Erfinder: NEEF, Pascal, 71636 Ludwigsburg (DE); KOHN, Kevin, 71636 Ludwigsburg (DE); JEDLICKA, Jan, 71636 Ludwigsburg (DE)
(74) Vertreter: Mann + Hummel Intellectual Property

(56) Entgegenhaltungen:
- EP-A1- 1 101 928
- WO-A1-2016/169838

## Beschreibung

### Technisches Gebiet

Die Erfindung betrifft ein Sekundärelement zur Verwendung in einem Filtersystem und ein Filtersystem zum Filtern eines Fluids mit einem Sekundärelement, insbesondere eines Luftführungssystems einer Brennkraftmaschine, insbesondere eines Kraftfahrzeugs.

### Stand der Technik

Es ist bekannt, Luftfilter einzusetzen, um Verbrennungs-Ansaugluft für Brennkraftmaschinen bei Kraftfahrzeugen, z. B. Pkw, Nutzfahrzeugen, Arbeitsmaschinen, landwirtschaftlichen Fahrzeugen, aber auch stationären Generatoren und dergleichen, zu filtern. Solche Luftfilter umfassen im Allgemeinen ein Gehäuse, einen Lufteinlass und einen Luftauslass, wobei ein entfernbares und austauschbares Haupt-Filterelement in dem Gehäuse angeordnet ist. Das Gehäuse umfasst häufig eine Wartungs- oder Zugangsabdeckung für einen Zugang zu dem im Inneren aufgenommenen Filterelement im Wartungsfall. Hierzu kann das Filterelement demontiert werden und entweder durch ein fabrikneues Filterelement ersetzt, überholt und wieder eingesetzt werden, oder durch ein zuvor gebrauchtes, aber überholtes Filterelement ausgetauscht werden.

Üblicherweise werden die Filterelemente von Luftfiltern nach einer bestimmten Betriebszeit ausgetauscht. Je nach Staubanfall kann die Standzeit eines Luftfilters wenige Tage, etwa beim Einsatz in Baumaschinen, bis zu mehreren Monaten in weniger staubbelasteter Umgebung betragen.

Insbesondere bei einem häufigen Austausch von Filterelementen ist die zuverlässige und prozesssichere Abdichtung des Filterelements in einem Gehäuse wichtig. Die Abdichtung soll temperaturbeständig und rüttelfest ausgeführt sein. Auch an Anlagen oder Einrichtungen, die starken Schwingungen oder Erschütterungen ausgesetzt sind, muss die Abdichtung des Filterelements gewährleistet sein. Gleichzeitig soll aber das Filterelement selbst möglichst keine metallischen Elemente aufweisen, damit es problemlos thermisch entsorgt werden kann.

Zum Schutz der Reinseite eines Luftführungssystems einer Brennkraftmaschine beim Austausch eines Filterelements vor eindringenden Schmutzpartikeln ist bei Luftfiltersystemen häufig ein sog. Sekundärelement vorhanden, welches beim Austausch im Filtersystem verbleibt. Das Sekundärelement sitzt üblicherweise auf der Reinseite des Filterelements, beispielsweise im Inneren eines Rundfilterelements und ist mit dem Gehäuse des Filtersystems verbunden. Das Sekundärelement weist selbst auch ein Filtermedium auf, das restliche Schmutzpartikel im Luftstrom vom Filterauslass fernhält. Das Sekundärelement kann selbst auch tauschbar sein, da es, allerdings in sehr viel größeren Zeitabständen als das eigentliche Filterelement, mit Staubpartikeln beladen sein kann.

Aus der US 8,480,778 B2 ist ein Luftfiltersystem bekannt, bei dem ein Sekundärelement vorhanden ist, das aus einem Filtermedium in Hohlzylinderanordnung besteht, das an einem Ende mit einer Kappe verschlossen ist und am anderen Ende offen ist. Mit dem offenen Ende kann es über ein im Inneren des Filterelements und mit dem Filtergehäuse verbundenen Mittelrohr gestülpt werden und so den Auslass des Filtersystems gegen eindringende Schmutzpartikel schützen. Über das auf dem Mittelrohr angebrachte Sekundärelement wird dann das eigentliche Filterelement montiert, das auf dem freien Ende des Mittelrohrs und damit auf der Kappe des Sekundärelements aufliegt.

Die DE 2948781 T5 offenbart ein konusförmiges Sicherheitselement auf einem metallischen Träger, das in einem Filterelement angeordnet ist.

Die WO 2016/169 838 A1 offenbart ein konusförmiges Sekundärelement auf einem Träger, wobei die Endscheibe des Sekundärelements eine nach innen weisende axiale Einstülpung aufweist mit nach radial außen weisenden Rasthaken, welche in eine formkomplementäre Einstülpung des Trägers eingehakt werden können.

### Offenbarung der Erfindung

Eine Aufgabe der Erfindung ist es, ein Sekundärelement für ein Filtersystem zu schaffen, das bei einfacher und sicherer Montierbarkeit eine zuverlässige Abdichtung der Reinseite eines Luftführungssystems, insbesondere bei Austausch des Filterelements im Wartungsfall, gewährleistet.

Eine weitere Aufgabe ist die Bereitstellung eines Filtersystems zur Aufnahme eines solchen austauschbaren Sekundärelements, das eine zuverlässige Abdichtung der Reinseite eines Luftführungssystems, insbesondere bei Austausch des Filterelements im Wartungsfall, gewährleistet.

Die vorgenannte Aufgabe wird nach einem Aspekt der Erfindung gelöst von einem Sekundärelement zur Verwendung in einem Filtersystem mit einer Längsrichtung und zwei sich entlang der Längsrichtung gegenüber liegenden Enden, umfassend ein um die Längsrichtung angeordnetes Filtermedium, wobei eines der Enden offen und das gegenüberliegende Ende mit einer geschlossenen Endscheibe dicht abgeschlossen ist,
wobei die Endscheibe eine erste Verbindungseinrichtung aufweist, die bei bestimmungsgemäßer Montage zum Zusammenwirken mit einer komplementären zweiten Verbindungseinrichtung eines Mittelrohrs eines Filtersystems vorgesehen ist, um das Sekundärelement auf dem Mittelrohr zu fixieren, wobei die erste Verbindungseinrichtung Rastelemente mit nach radial innen gerichteten Rasthaken aufweist, welche auf einem äußeren Umfang der Endscheibe verteilt angeordnet sind,
wobei das Filtermedium die Rastelemente umgibt. Der Abstand zweier direkt benachbarter Rastelemente entlang des äußeren Umfangs der Endscheibe ist größer als eine Abmessung in Umfangsrichtung eines an einem Kragen des Mittelrohrs angeordneten Abweiselements, das an dem Kragen des Mittelrohrs nach radial außen weisend angeordnet ist.

Die weitere Aufgabe wird gelöst von einem Filtersystem zum Filtern eines Fluids umfassend ein Gehäuse, einen am Gehäuse angeordneten Einlassstutzen zum Zuführen eines zu filternden Fluids, insbesondere Luft, einen am Gehäuse angeordneten Auslassstutzen zur Ableitung des gefilterten Fluids, insbesondere ein in einer Längsrichtung zentral angeordneter Auslassstutzen, wenigstens ein Filterelement, das zwischen Einlassstutzen und Auslassstutzen angeordnet ist, ein im Inneren des Gehäuses entlang der Längsrichtung angeordnetes Mittelrohr zur Aufnahme eines Filterelements, wobei das Mittelrohr als Träger eines Sekundärelements vorgesehen ist, welches im Inneren des Filterelements angeordnet ist, wobei das Sekundärelement an einem Ende eine geschlossene Endscheibe aufweist, wobei das Sekundärelement und das Mittelrohr jeweils zueinander komplementäre Verbindungseinrichtungen aufweisen, mit denen sie an einer ihrer Stirnseiten miteinander verbindbar sind, wobei die erste Verbindungseinrichtung des Sekundärelements Rastelemente aufweist, welche auf einem äußeren Umfang der Endscheibe verteilt angeordnet sind und nach radial innen gerichtete Rasthaken aufweisen, wobei die zweite Verbindungseinrichtung des Mittelrohrs einen umlaufenden Kragen aufweist, wobei die Rastelemente in einem bestimmungsgemäß montierten Zustand mittels der Rasthaken mit dem Kragen des Mittelrohrs verrastet sind und das Sekundärelement in der Längsrichtung des Filtersystems fixieren. Das Mittelrohr weist wenigstens ein am Kragen des Mittelrohrs nach radial außen angeordnetes Abweiselement auf. Der Abstand zweier direkt benachbarter Rastelemente entlang des äußeren Umfangs der Endscheibe ist größer als eine Abmessung in Umfangsrichtung des am Kragen des Mittelrohrs angeordneten Abweiselements.

Günstige Ausgestaltungen und Vorteile der Erfindung ergeben sich aus den weiteren Ansprüchen, der Beschreibung und der Zeichnung.

Es wird nach einem Aspekt der Erfindung ein Sekundärelement zur Verwendung in einem Filtersystem vorgeschlagen, mit einer Längsrichtung und zwei sich entlang der Längsrichtung gegenüber liegenden Enden, umfassend ein um die Längsrichtung angeordnetes Filtermedium, wobei eines der Enden offen und das gegenüberliegende Ende mit einer geschlossenen Endscheibe dicht abgeschlossen ist. Die Endscheibe weist eine erste Verbindungseinrichtung auf, die bei bestimmungsgemäßer Montage zum Zusammenwirken mit einer komplementären zweiten Verbindungseinrichtung eines Mittelrohrs eines Filtersystems vorgesehen ist, um das Sekundärelement auf dem Mittelrohr zu fixieren. Die erste Verbindungseinrichtung weist Rastelemente mit nach radial innen gerichteten Rasthaken auf, welche auf einem äußeren Umfang der Endscheibe verteilt angeordnet sind, wobei das Filtermedium die Rastelemente umgibt. Der Abstand zweier direkt benachbarter Rastelemente entlang des äußeren Umfangs der Endscheibe ist größer als eine Abmessung in Umfangsrichtung eines an einem Kragen des Mittelrohrs angeordneten Abweiselements, das an dem Kragen des Mittelrohrs nach radial außen weisend angeordnet ist.

Dadurch kann verhindert werden, dass zwei Rastelemente mit dem Abweiselement verhaken können und sich das Sekundärelement nicht zur Gänze aufschieben lässt.

Ein typischer runder Luftfilter, beispielsweise für schwere Lkw, weist ein primäres Filterelement, beispielsweise aus gefaltetem Zellulosematerial, und ein sekundäres Filterelement auf. Dieses sogenannte Sekundärelement dient dazu, bei einem Wechsel des Filterelements zu verhindern, dass Rohfluid auf die Reinfluidseite und somit zum Reinfluidausgang gelangen kann. Das Sekundärelement kann beispielsweise als sogenanntes Sockenelement ausgebildet sein, welches am nicht gegen das Filtergehäuse gedichteten Ende mit einem dichten Kunststoffdeckel abgedichtet ist.

Das vorgeschlagene Sekundärelement, dessen Durchmesser sich vom offenen Ende zum geschlossenen Ende verjüngt, besteht aus einem konischen, rund geformten Filtermedium, das an den Längsenden durch Schweißen verbunden ist, und aus einer Kunststoff-Endscheibe, die beispielsweise durch Schweißen mit dem Filtermedium verbunden sein kann. Das Filtermedium des Sekundärelements kann beispielsweise aus einem Vlies oder aus Papier oder aus Zellulose oder aus einer Mischfaser aus Kunststoff und Zellulose gebildet sein.

Die Endscheibe weist Rastelemente auf, um das Sekundärelement mit dem im Gehäuse integrierten Mittelrohr zu verbinden und zu fixieren. Dabei greifen die Rastelemente von einer radialen Außenseite an dem Kragen eines Mittelrohrs des Filtersystems an. Die Rastelemente sind in einem bestimmungsgemäß montierten Zustand mit den Rasthaken am Kragen des Mittelrohrs festgelegt und/oder verrastet und fixieren das Sekundärelement in einer Längsrichtung des Filtersystems. Die Rasthaken sind dabei radial nach innen gerichtet und verrasten am äußeren Umfang des Kragens.

Diese Verbindung kann durch Anwendung einer ausreichenden Kraft gelöst werden, um das Sekundärelement von dem Mittelrohr zu demontieren.

Gemäß einer günstigen Ausgestaltung des Sekundärelements kann die Endscheibe eine Ausbuchtung aufweisen, welche in der Längsrichtung nach außen ragt. Die Endscheibe des Sekundärelements kann eine nach außen, zum Bodenbereich des primären Filterelements des Filtersystems gerichtete Aussparung aufweisen, die auf der inneren Reinseite Platz bietet. Dieser Raum kann beispielsweise für die Integration eines akustischen Resonators genutzt werden. Außerdem kann die Ausbuchtung als Positionierhilfe und/oder Montagehilfe bei der Montage des Sekundärelements dienen. Zusätzlich kann die Ausbuchtung durch Prägung einer Aussteifung der Endscheibe dienen.

Die Ausbuchtung kann beispielsweise kegelstumpfförmig ausgebildet sein mit der Spitze des Trichters in axialer Richtung nach außen. Die Ausbuchtung kann dabei insbesondere formkonform zu einer kegelstumpfförmigen Ausbuchtung des Mittelrohrs ausgebildet sein, sodass die Ausbuchtung des Sekundärelements an der Ausbuchtung des Mittelrohrs anliegen kann, wenn das Sekundärelement auf dem Mittelrohr montiert wird.

Gemäß einer günstigen Ausgestaltung des Sekundärelements können die Rastelemente auf dem äußeren Umfang der Endscheibe gruppiert verteilt sein. Insbesondere kann dabei jeweils ein Rastelement zu einem auf einer Seite entlang des Umfangs direkt benachbarten Rastelement einen kleineren Abstand aufweisen als zu einem auf der anderen Seite entlang des Umfangs benachbarten Rastelement. So können beispielsweise Zweier-Gruppen von Rastelementen über den Umfang der Endscheibe verteilt angeordnet sein. Vorteilhaft können so die nötigen Montagekräfte und/oder Demontagekräfte für das Sekundärelement reduziert werden. Alternativ können die Rastelemente auch gleichverteilt angeordnet sein.

Der Abstand zweier direkt benachbarter Rastelemente entlang des äußeren Umfangs der Endscheibe ist größer als eine Abmessung in Umfangsrichtung eines am Kragen des Mittelrohrs angeordneten Abweiselements. Das Abweiselement soll dabei verhindern, dass das Sekundärelement in einer rotatorischen Position auf dem Mittelrohr positioniert wird, in der ein Rastelement mit einer Versteifungsrippe des Mittelrohrs kollidiert.

Gemäß einer günstigen Ausgestaltung des Sekundärelements kann die Endscheibe mit dem Filtermedium fest verbunden sein. Insbesondere kann die Endscheibe mit dem Filtermedium verschweißt oder verklebt oder angespritzt sein. Dadurch kann eine dichte und dauerhafte Verbindung zwischen der Endscheibe und dem Mantel aus Filtermedium des Sekundärelements erreicht werden.

Es wird nach einem weiteren Aspekt der Erfindung ein Filtersystem zum Filtern eines Fluids vorgeschlagen, umfassend ein Gehäuse, einen am Gehäuse angeordneten Einlassstutzen zum Zuführen eines zu filternden Fluids, insbesondere Luft, einen am Gehäuse angeordneten Auslassstutzen zur Ableitung des gefilterten Fluids, insbesondere ein in einer Längsrichtung zentral angeordneter Auslassstutzen, wenigstens ein Filterelement, das zwischen Einlassstutzen und Auslassstutzen angeordnet ist, und ein im Inneren des Gehäuses entlang der Längsrichtung angeordnetes Mittelrohr zur Aufnahme eines Filterelements. Das Mittelrohr ist als Träger eines Sekundärelements vorgesehen, welches im Inneren des Filterelements angeordnet ist. Das Sekundärelement weist an einem Ende eine geschlossene Endscheibe auf. Das Sekundärelement und das Mittelrohr weisen jeweils zueinander komplementäre Verbindungseinrichtungen auf, mit denen sie an einer ihrer Stirnseiten miteinander verbindbar sind. Dabei weist die erste Verbindungseinrichtung des Sekundärelements Rastelemente auf, welche auf einem äußeren Umfang der Endscheibe verteilt angeordnet sind und nach radial innen gerichtete Rasthaken aufweisen. Die zweite Verbindungseinrichtung des Mittelrohrs weist einen umlaufenden Kragen auf. Dabei sind die Rastelemente in einem bestimmungsgemäß montierten Zustand mittels der Rasthaken mit dem Kragen des Mittelrohrs verrastet und fixieren das Sekundärelement in der Längsrichtung des Filtersystems. Das Mittelrohr weist wenigstens ein am Kragen des Mittelrohrs nach radial außen angeordnetes Abweiselement auf. Der Abstand zweier direkt benachbarter Rastelemente entlang des äußeren Umfangs der Endscheibe ist größer als eine Abmessung in Umfangsrichtung eines an dem Kragen des Mittelrohrs angeordneten Abweiselements.

Dadurch kann verhindert werden, dass zwei Rastelemente mit dem Abweiselement verhaken können und sich das Sekundärelement nicht zur Gänze aufschieben lässt.

Das vorgeschlagene Filtersystem, beispielsweise ein typischer runder Luftfilter für schwere Lkw, weist ein primäres Filterelement, beispielsweise aus gefaltetem Zellulosematerial, und ein sekundäres Filterelement auf. Dieses sogenannte Sekundärelement dient dazu, bei einem Wechsel des Filterelements zu verhindern, dass Rohfluid auf die Reinfluidseite und somit zum Reinfluidausgang gelangen kann. Das Sekundärelement kann beispielsweise als sogenanntes Sockenelement ausgebildet sein, welches am nicht gegen das Filtergehäuse gedichteten Ende mit einem dichten Kunststoffdeckel abgedichtet ist.

Das Filtergehäuse weist ein gehäusefestes Mittelrohr auf, auf welchem das Sekundärelement angeordnet ist. Das Mittelrohr dient weiter zur Aufnahme des primären Filterelements über dem Sekundärelement. Das Mittelrohr konisch ausgebildet ist und sich im Durchmesser vom Auslassstutzen weg entlang der Längsachse verjüngt.

Das Sekundärelement, dessen Durchmesser sich vom offenen Ende zum geschlossenen Ende verjüngt, besteht aus einem konischen, rund geformten Filtermedium, das an den Längsenden durch Schweißen verbunden ist, und aus einer Kunststoff-Endscheibe, die beispielsweise durch Schweißen mit dem Filtermedium verbunden sein kann. Das Filtermedium des Sekundärelements kann beispielsweise aus einem Vlies oder aus Papier oder aus Zellulose oder aus einer Mischfaser aus Kunststoff und Zellulose gebildet sein.

Die Endscheibe weist Rastelemente auf, um das Sekundärelement mit dem im Gehäuse integrierten Mittelrohr zu verbinden und zu fixieren. Dabei greifen die Rastelemente von einer radialen Außenseite an dem Kragen des Mittelrohrs des Filtersystems an. Die Rastelemente sind in einem bestimmungsgemäß montierten Zustand mit den Rasthaken am Kragen des Mittelrohrs festgelegt und/oder verrastet und fixieren das Sekundärelement in einer Längsrichtung des Filtersystems. Die Rasthaken sind dabei radial nach innen gerichtet und verrasten am äußeren Umfang des Kragens.

Diese Verbindung kann durch Anwendung einer ausreichenden Kraft gelöst werden, um das Sekundärelement von dem Mittelrohr zu demontieren.

Gemäß einer günstigen Ausgestaltung des Filtersystems können die zueinander komplementären Verbindungseinrichtungen zerstörungsfrei lösbar ausgebildet sein. Dadurch kann ein separater Austausch des Sekundärelements im Bedarfsfall bei Erschöpfung der Filterleistung auf einfache Weise durchgeführt werden.

Gemäß einer günstigen Ausgestaltung des Filtersystems kann das Sekundärelement das Mittelrohr am geschlossenen Ende axial überragen. So kann das Sekundärelement auf das Mittelrohr aufgeschoben werden und dichtet den Auslassstutzen bei einem Wechsel des Filterelements zuverlässig gegen eine Verschmutzung ab.

Gemäß einer günstigen Ausgestaltung des Filtersystems kann das Mittelrohr an seinem Ende, an dem die zweite Verbindungseinrichtung angeordnet ist, eine Ausbuchtung, insbesondere eine flexible Rippenstruktur, aufweisen, die formkonform mit einer Ausbuchtung des Sekundärelements ausgebildet ist. Am gehäusefesten Mittelrohr kann so eine Ausbuchtung, insbesondere in Form einer flexiblen Rippenstruktur implementiert sein, welche in die nach außen gerichtete Ausbuchtung der Endscheibe des Sekundärelements ragt und eine Rastverbindung zwischen Mittelrohr und Sekundärelement unter geringer Vorspannung ermöglicht. Dies kann die Geräuschbildung bei Vibrationen aufgrund von axialen Toleranzen von Endscheibe und gehäusefestem Mittelrohr verhindern.

Die Ausbuchtung kann zweckmäßigerweise als Positionierhilfe und/oder Montagehilfe bei der Montage des Sekundärelements dienen.

Gemäß einer günstigen Ausgestaltung des Filtersystems kann die Ausbuchtung des Sekundärelements kegelstumpfförmig ausgebildet sein und insbesondere formkonform zu einer kegelstumpfförmigen Ausbuchtung des Mittelrohrs ausgebildet sein. Die Ausbuchtung kann beispielsweise kegelstumpfförmig mit der Spitze des Trichters in axialer Richtung nach außen ausgebildet sein. Dadurch, dass die Ausbuchtung dabei insbesondere formkonform zu einer Ausbuchtung des Mittelrohrs ausgebildet sein kann, kann die Ausbuchtung des Sekundärelements an der Ausbuchtung des Mittelrohrs anliegen, wenn das Sekundärelement auf dem Mittelrohr montiert wird. **In** alternativen Ausführungsformen kann die Ausbuchtung auch andere Formen aufweisen, beispielsweise eine halbkugelförmige Ausbuchtung.

Gemäß einer günstigen Ausgestaltung des Filtersystems können die Rastelemente auf dem äußeren Umfang der Endscheibe gruppiert verteilt sein. Insbesondere kann jeweils ein Rastelement zu einem auf einer Seite entlang des Umfangs direkt benachbarten Rastelemente einen kleineren Abstand aufweisen als zu einem auf der anderen Seite entlang des Umfangs benachbarten Rastelement. So können beispielsweise Zweiergruppen von Rastelementen über den Umfang der Endscheibe verteilt angeordnet sein. Vorteilhaft können so die nötigen Montagekräfte und/oder Demontagekräfte reduziert werden. Alternativ können die Rastelemente auch gleichverteilt angeordnet sein.

Das Abweiselement kann an einer Umfangsposition einer Versteifungsrippe des Mittelrohrs angeordnet sein. Das Abweiselement soll dabei verhindern, dass das Sekundärelement in einer rotatorischen Position auf dem Mittelrohr positioniert wird, in der ein Rastelement mit einer Versteifungsrippe des Mittelrohrs kollidiert, was die Haltekräfte der Schnapphaken negativ beeinträchtigt.

Zweckmäßigerweise kann das Abweiselement dazu eine Steuerfläche aufweisen, welche das Rastelement beim Aufschieben des Sekundärelements zur Seite führt, sodass das Rastelement neben der Versteifungsrippe mit dem Kragen verrasten kann. Auf diese Weise wird das Sekundärelement beim Auftreffen des Rastelements auf das Abweiselement um die Längsachse zur Seite gedreht. Für diese Funktion genügt ein einziges Abweiselement auf dem Umfang des Kragens des Mittelrohrs. Dennoch ist ein gegenüberliegendes Abweiselement von Vorteil, weil so ein Verkippen des Deckels verhindert werden kann.

Gemäß einer günstigen Ausgestaltung des Filtersystems kann der Kragen des Mittelrohrs in Längsrichtung weisende Abstützelemente aufweisen, welche in bestimmungsgemäß montiertem Zustand des Sekundärelements an einer nach innen gerichteten Gegenhaltefläche der Endscheibe anliegen. Insbesondere kann dabei das Sekundärelement in bestimmungsgemäß montiertem Zustand mittels der Abstützelemente in Längsrichtung verspannt sein. Dadurch kann die Positionierung des Sekundärelements auf dem Mittelrohr erleichtert werden. Außerdem können die Abstützelemente vorteilhaft zum Erzeugen einer Vorspannung zwischen Sekundärelement und Mittelrohr dienen. Das Abstützelement kann vorteilhaft als ein elastisches Element ausgebildet sein, das komprimiert werden kann, um eine Vorspannung aufzubauen. Alternativ kann das Abstützelement jedoch auch ein festes Element aus Kunststoff sein. Beispielsweise kann das Abstützelement als 2K-Kunststoffbauteil mit einem Gummipuffer ausgebildet sein.

Gemäß einer günstigen Ausgestaltung des Filtersystems kann das Sekundärelement an dem Mittelrohr unter Vorspannung festgelegt sein. Insbesondere kann dabei ein Vorspannungselement zwischen Sekundärelement und Mittelrohr angeordnet sein. Insbesondere kann das Vorspannungselement zwischen der Endscheibe des Sekundärelements und dem Kragen des Mittelrohrs angeordnet sein. Zweckmäßigerweise kann das Vorspannungselement, welches beispielsweise als elastischer Ring ausgebildet sein kann, mit dem Kragen des Mittelrohrs verbunden, beispielsweise verklebt, sein. Das Vorspannungselement kann vorteilhaft als ein elastisches Element ausgebildet sein, das komprimiert werden kann, um eine Vorspannung aufzubauen. Alternativ kann das Vorspannungselement jedoch auch ein festes Element aus Kunststoff sein. Beispielsweise kann das Vorspannungselement als 2K-Kunststoffbauteil mit einem Gummipuffer ausgebildet sein. Dadurch können Vibrationen, welche im Fahrbetrieb eines Fahrzeugs vorhanden sind, auf vorteilhafte Weise von dem Sekundärelement ferngehalten werden, sodass die Lebensdauer des Sekundärelements verlängert werden kann.

Gemäß einer günstigen Ausgestaltung des Filtersystems kann das Filterelement an seiner auslassstutzenseitigen Stirnseite radial nach innen abdichten. Dadurch kann der Rohfluidbereich auf zuverlässige Weise von dem Reinfluidbereich getrennt werden.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine isometrische Darstellung eines Filtersystems zum Filtern eines Fluids nach einem Ausführungsbeispiel der Erfindung;
- Fig. 2: einen Längsschnitt durch das Filtersystem nach Figur 1;
- Fig. 3: eine teilgeschnittene isometrische Darstellung eines Mittelrohrs mit darüber montiertem Sekundärelement nach einem Ausführungsbeispiel der Erfindung;
- Fig. 4: eine Ausschnittvergrößerung des Bereichs der Endscheibe des Sekundärelements nach Figur 3;
- Fig. 5: eine isometrische Darstellung eines Sekundärelements nach einem Ausführungsbeispiel der Erfindung;
- Fig. 6: einen Längsschnitt durch das Sekundärelement nach Figur 5;
- Fig. 7: eine isometrische Darstellung der Endscheibe des Sekundärelements nach Figur 5 in einer Ansicht von innen;
- Fig. 8: eine Ausschnittvergrößerung eines Längsschnitts des Filtersystems nach Figur 2 durch Sekundärelement und Mittelrohr im Bereich der Endscheibe des Sekundärelements und des Kragens des Mittelrohrs;
- Fig. 9: eine isometrische Darstellung des Mittelrohrs des Filtersystems nach Figur 2;
- Fig. 10: einen Längsschnitt durch ein Filtersystem zum Filtern eines Fluids nach einem weiteren Ausführungsbeispiel der Erfindung mit einem Sekundärelement;
- Fig. 11: eine Ausschnittvergrößerung eines Längsschnitts des Filtersystems nach Figur 10 durch Sekundärelement und Mittelrohr im Bereich der Endscheibe des Sekundärelements und des Kragens des Mittelrohrs;
- Fig. 12: eine isometrische Darstellung des Mittelrohrs des Filtersystems nach Figur 10;
- Fig. 13: einen Längsschnitt durch ein Filtersystem zum Filtern eines Fluids nach einem weiteren Ausführungsbeispiel der Erfindung mit einem Sekundärelement;
- Fig. 14: eine Ausschnittvergrößerung eines Längsschnitts des Filtersystems nach Figur 13 durch Sekundärelement und Mittelrohr im Bereich der Endscheibe des Sekundärelements und des Kragens des Mittelrohrs; und
- Fig. 15: eine isometrische Darstellung des Mittelrohrs des Filtersystems nach Figur 13.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

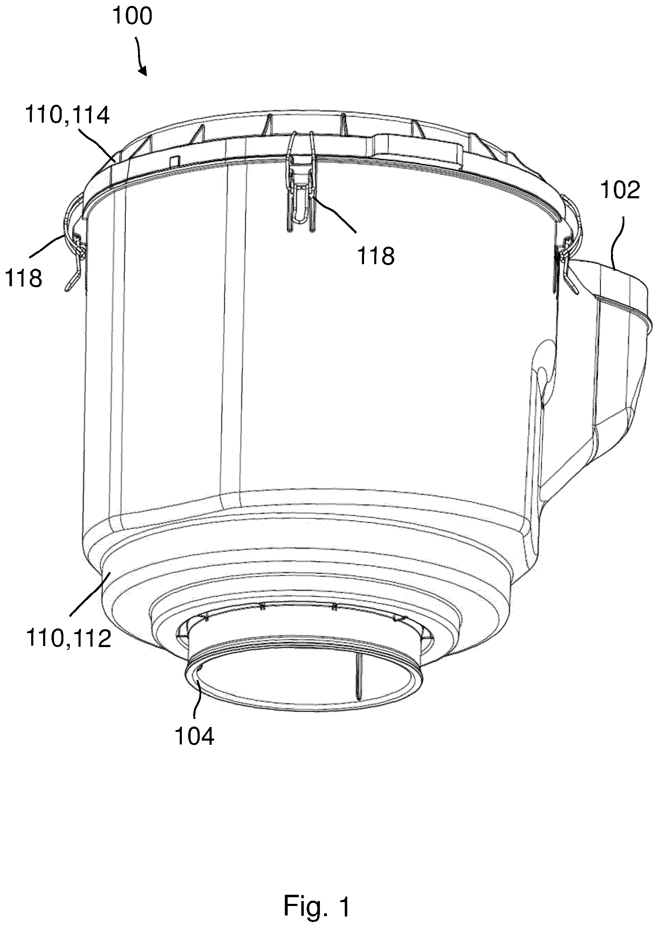

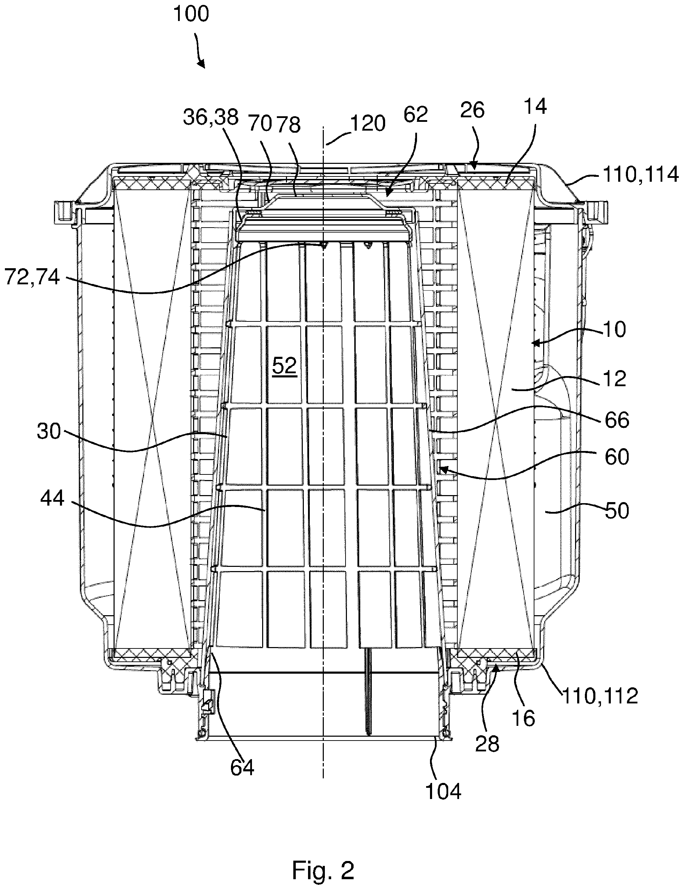

Figur 1 zeigt eine isometrische Darstellung eines Filtersystems 100 zum Filtern eines Fluids nach einem Ausführungsbeispiel der Erfindung, während in Figur 2 ein Längsschnitt durch das Filtersystem 100 dargestellt ist.

Das Filtersystem 100 zum Filtern eines Fluids, insbesondere eines Luftführungssystems einer Brennkraftmaschine, insbesondere eines Kraftfahrzeugs, umfasst ein Filtergehäuse 110 mit einem Gehäuseunterteil 112 und einem Gehäuseoberteil 114, die sich entlang einer Längsrichtung 120 erstrecken. Die beiden Gehäuseteile 112, 114 sind über Verbindungselemente 118 verbunden, beispielsweise verklipst, sodass zum Wechsel des Filterelements 10 das Filtergehäuse 110 leicht geöffnet, das Gehäuseoberteil 114 abgenommen und das Filterelement 10 dem Gehäuseunterteil 112 entnommen werden kann. Am Gehäuse 110 ist ein Einlassstutzen 102 zum Zuführen eines zu filternden Fluids, insbesondere Luft, und ein Auslassstutzen 104 zur Ableitung des gefilterten Fluids angeordnet. Der Auslassstutzen 104 ist dabei in der Längsrichtung 120 des Filtersystems 100 zentral angeordnet.

Das Filtersystem 100 umfasst weiter ein Filterelement 10, das eine Reinfluidseite 52 und eine Rohfluidseite 50 fluiddicht trennt. Dabei umfasst das Filterelement 10 einen um Längsrichtung 120 angeordneten hohlzylinderartigen Filterbalg 12, der eine geschlossene Umfangswand aufweist, welche sich axial entlang der Längsrichtung 120 erstreckt und einen Innenraum des Filterbalgs 12 umgibt. Das Filterelement 10 weist an einer ersten Stirnseite 26 eine erste Endscheibe 14 auf, die einer zweiten Endscheibe 16 an einer zweiten Stirnseite 28 gegenüberliegt, die einen Fluiddurchlass für das gefilterte Fluid aufweist.

In dem Gehäuse 110 ist das Filterelement 10 zwischen Einlassstutzen 102 und Auslassstutzen 104 angeordnet. Das Filterelement 10 dichtet an seiner auslassstutzenseitigen Stirnseite 28 radial nach innen ab, sodass der Rohfluidbereich auf zuverlässige Weise von dem Reinfluidbereich getrennt ist.

Weiter ist im Inneren des Gehäuses 110 entlang der Längsrichtung 120 ein Mittelrohr 30 zur Aufnahme des Filterelements 10 angeordnet. Das Mittelrohr 30 ist weiter als Träger eines Sekundärelements 60 vorgesehen, welches im Inneren des Filterelements 10 angeordnet ist.

Das Sekundärelement 60 weist an einem Ende 62 eine geschlossene Endscheibe 70 auf. Das Sekundärelement 60 überragt das Mittelrohr 30 am geschlossenen Ende 62 axial.

Sekundärelement 60 und Mittelrohr 30 weisen jeweils zueinander komplementäre Verbindungseinrichtungen 72, 36 auf, mit denen sie an einem ihrer Enden 62, 32 miteinander verbunden sind.

Dabei weist die erste Verbindungseinrichtung 72 des Sekundärelements 60 Rastelemente 74 auf, welche auf einem äußeren Umfang der Endscheibe 70 verteilt angeordnet sind und nach radial innen gerichtete Rasthaken 76 aufweisen. Die zweite Verbindungseinrichtung 36 des Mittelrohrs 30 weist einen umlaufenden Kragen 38 auf. Dabei die Rastelemente 74 sind in einem bestimmungsgemäß montierten Zustand mittels der Rasthaken 76 mit dem Kragen 38 des Mittelrohrs 30 verrastet und fixieren so das Sekundärelement 60 in der Längsrichtung 120 des Filtersystems 100.

Die zueinander komplementären Verbindungseinrichtungen 72, 36 sind zerstörungsfrei lösbar ausgebildet, sodass ein separater Austausch des Sekundärelements 60 im Bedarfsfall bei Erschöpfung der Filterleistung auf einfache Weise durchgeführt werden kann.

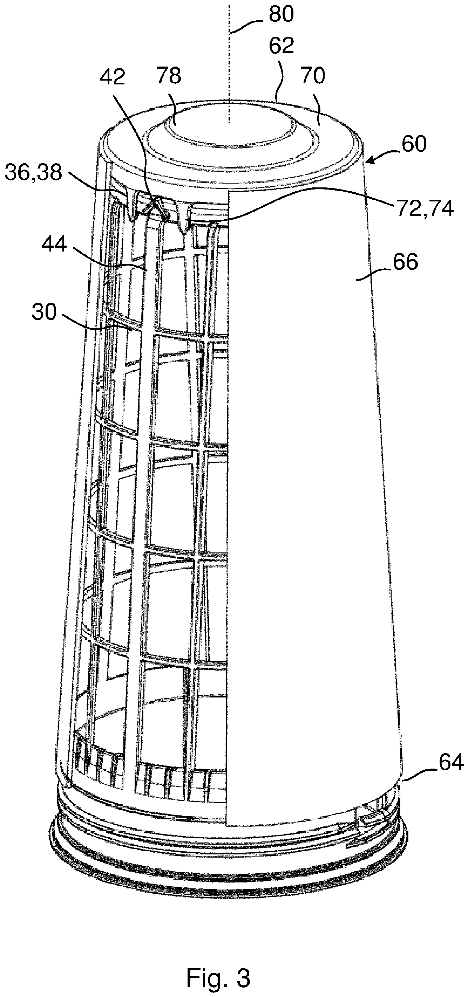

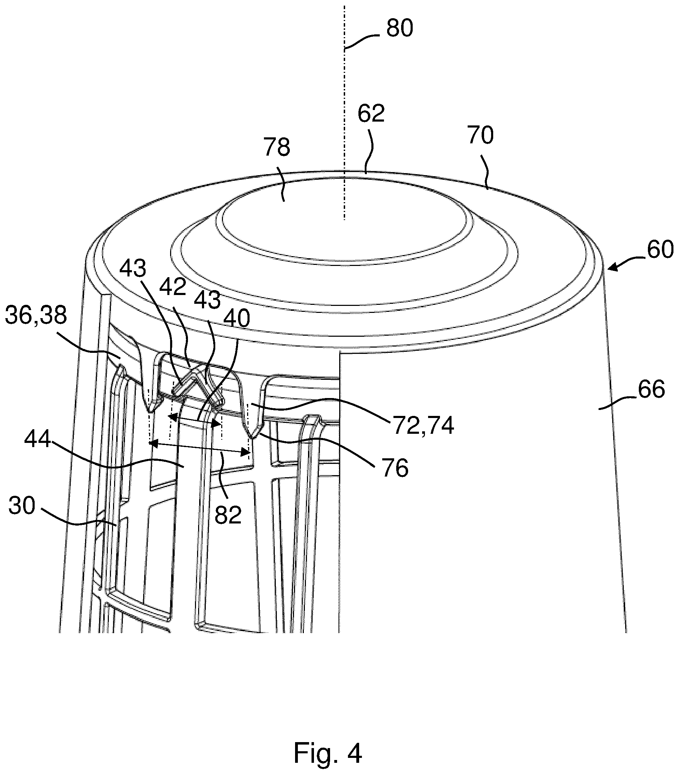

Figur 3 zeigt eine teilgeschnittene isometrische Darstellung des Mittelrohrs 30 mit darüber montiertem Sekundärelement 60 nach einem Ausführungsbeispiel der Erfindung. **In** Figur 4 ist eine Ausschnittvergrößerung des Bereichs der Endscheibe 70 des Sekundärelements 60 dargestellt.

Das Sekundärelement 60 mit einer Längsrichtung 80 und zwei sich entlang der Längsrichtung 80 gegenüber liegenden Enden 62, 64, umfasst ein um die Längsrichtung 80 angeordnetes Filtermedium 66. Eines der Enden 64, nämlich das zur dem Auslassstutzen 104 gerichtete Ende 64, ist offen, während das gegenüberliegende Ende 62 mit einer geschlossenen Endscheibe 70 dicht abgeschlossen ist. Der Durchmesser des Sekundärelements 60 verjüngt sich vom offenen Ende 64 zum geschlossenen Ende 62. Die Endscheibe 70 ist mit dem Filtermedium 66 fest verbunden, insbesondere verschweißt oder verklebt oder angespritzt.

Das Filtermedium 66 kann beispielsweise aus einem Vlies oder aus Papier oder aus Zellulose oder aus einer Mischfaser aus Kunststoff und Zellulose gebildet sein.

Die Endscheibe 70 weist die erste Verbindungseinrichtung 72 auf, die bei bestimmungsgemäßer Montage zum Zusammenwirken mit der komplementären zweiten Verbindungseinrichtung 36 des Mittelrohrs 30 des Filtersystems 100 vorgesehen ist, um das Sekundärelement 60 auf dem Mittelrohr 30 zu fixieren.

Die erste Verbindungseinrichtung 72 weist Rastelemente 74 mit nach radial innen gerichteten Rasthaken 76 auf, welche auf dem äußeren Umfang der Endscheibe 70 verteilt angeordnet sind. Dabei umgibt das Filtermedium 66 die Rastelemente 74.

Aus Übersichtlichkeitsgründen ist jeweils nur eines der Rastelemente 74 mit Bezugszeichen versehen.

Die Rastelemente 74 sind in einem bestimmungsgemäß montierten Zustand des Sekundärelements 60 mit den Rasthaken 76 am Kragen 38 des Mittelrohrs 30 festgelegt/verrastet und fixieren so das Sekundärelement 60 in der Längsrichtung 120 des Filtersystems 100.

Wie in Figur 4 erkennbar, weist das Mittelrohr 30 wenigstens ein am Kragen 38 des Mittelrohrs 30 nach radial außen angeordnetes Abweiselement 42 auf, welches an einer Umfangsposition um die Längsachse 80 einer Versteifungsrippe 44 des Mittelrohrs 30 angeordnet ist. Das Abweiselement 42 soll verhindern, dass Rastelemente 74 beim Aufschieben des Sekundärelements 60 auf das Mittelrohr 30 auf Versteifungsrippen 44 treffen. Dazu weist das Abweiselement 42 Steuerflächen 43 auf, welche das Rastelement 74 und damit das ganze Sekundärelement 60 um die Längsachse 80 zur Seite bewegen, sodass das Rastelement 74 sicher mit dem Kragen 38 verrasten kann.

Der Abstand 82 zweier direkt benachbarter Rastelemente 74 entlang des äußeren Umfangs der Endscheibe 70 ist größer als eine Abmessung 40 in Umfangsrichtung des Kragens 38 eines am Kragen 38 des Mittelrohrs 30 angeordneten Abweiselements 42. Dadurch kann verhindert werden, dass zwei Rastelemente 74 mit dem Abweiselement 42 verhaken können und sich das Sekundärelement 60 nicht zur Gänze aufschieben lässt.

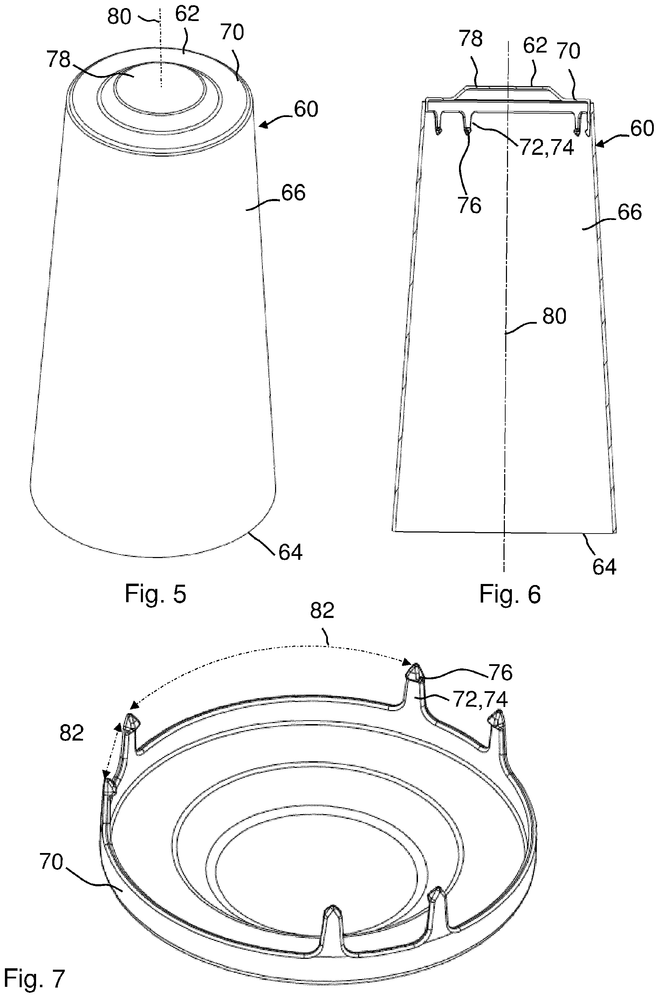

Figur 5 zeigt eine isometrische Darstellung des Sekundärelements 60, während in Figur 6 ein Längsschnitt durch das Sekundärelement und in Figur 7 eine isometrische Darstellung der Endscheibe 70 des Sekundärelements 60 in einer Ansicht von innen dargestellt ist. Die konisch zulaufende Form des durch das Filtermedium 66 gebildeten Mantels des Sekundärelements 60 sowie die von der Endscheibe 70 in Längsrichtung 80 abstehenden und nach innen gerichteten Rastelemente 74 sind deutlich erkennbar.

Die Endscheibe 70 weist weiter eine Ausbuchtung 78 auf, welche in der Längsrichtung 80 nach außen ragt. Die Ausbuchtung 78 kann als Positionierhilfe und/oder Montagehilfe bei der Montage des Sekundärelements 60 dienen. Das Mittelrohr 30 kann dazu an seinem Ende 32, an dem die zweite Verbindungseinrichtung 36 angeordnet ist, eine, in dieser Darstellung nicht sichtbaren, Ausbuchtung 34 aufweisen, die formkonform mit der Ausbuchtung 78 des Sekundärelements 60 ausgebildet ist. Die Ausbuchtung 34 kann insbesondere als flexible Rippenstruktur ausgebildet sein, welche in die nach außen gerichtete Aussparung 78 der Endscheibe 70 des Sekundärelements 60 ragt und eine Rastverbindung zwischen Mittelrohr 30 und Sekundärelement 60 unter geringer Vorspannung ermöglicht.

Insbesondere kann die Ausbuchtung 78 kegelstumpfförmig ausgebildet sein und formkonform zu einer kegelstumpfförmigen Ausbuchtung 34 des Mittelrohrs 30 ausgebildet sein. **In** alternativen Ausführungsformen kann die Ausbuchtung 78 jedoch auch andere Formen aufweisen, beispielsweise eine halbkugelförmige Ausbuchtung

Wie insbesondere in Figur 7 erkennbar, können die Rastelemente 74 auf dem äußeren Umfang der Endscheibe 70 gruppiert verteilt sein. Insbesondere kann so jeweils ein Rastelement 74 zu einem auf einer Seite entlang des Umfangs direkt benachbarten Rastelement 74 einen kleineren Abstand 82 aufweisen als zu einem auf der anderen Seite entlang des Umfangs benachbarten Rastelement 74. Bei dem dargestellten Ausführungsbeispiel sind die Rastelemente 74 in Zweiergruppen angeordnet.

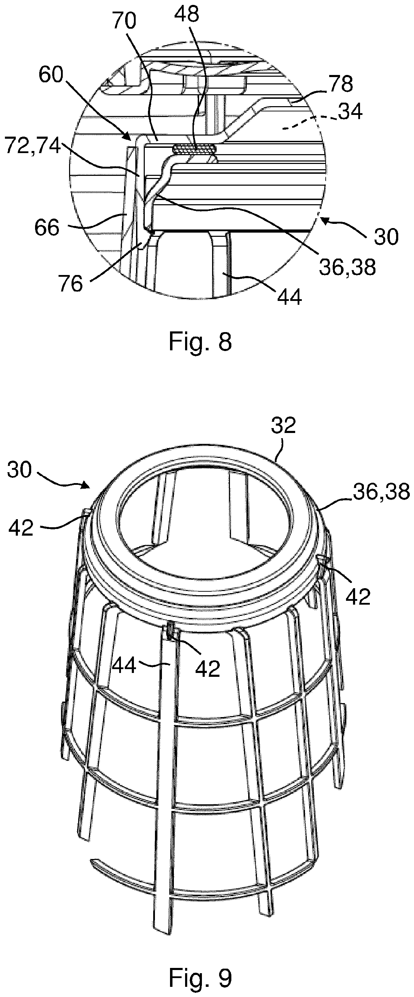

Figur 8 zeigt eine Ausschnittvergrößerung des Längsschnitts des Filtersystems 100 nach Figur 2 durch Sekundärelement 60 und Mittelrohr 30 im Bereich der Endscheibe 70 des Sekundärelements 60 und des Kragens 38 des Mittelrohrs 30.

In Figur 8 ist erkennbar, wie die Endscheibe 70 des Sekundärelements 60 an dem Kragen 38 des Mittelrohrs 30 abgestützt ist, insbesondere wie ein am äußeren Umfang der Endscheibe 70 radial nach innen abstehendes Rastelement 74 mit seinem Rasthaken 76 unter den Kragen 38 greift und so das Sekundärelement 60 mit dem Kragen 38 des Mittelrohrs 30 verrastet.

Das Sekundärelement 60 ist dabei an dem Mittelrohr 30 unter Vorspannung festgelegt, um die Übertragung von Vibrationen vom Mittelrohr 30 auf das Sekundärelement 60 zu dämpfen. Insbesondere kann dazu, wie bei dem Ausführungsbeispiel in Figur 8 dargestellt, ein Vorspannungselement 48 zwischen Sekundärelement 60 und Mittelrohr 30 angeordnet sein, das zwischen der Endscheibe 70 des Sekundärelements 60 und dem Kragen 38 des Mittelrohrs 30 angeordnet ist.

Figur 9 zeigt eine isometrische Darstellung des Mittelrohrs 30 des Filtersystems 100. Das Mittelrohr 30 ist konisch ausgebildet und verjüngt sich im Durchmesser vom Auslassstutzen 104 weg entlang der Längsachse 120. Radial nach außen abstehende Abweiselemente 42 sind an dem Kragen 38 des Mittelrohrs 30 erkennbar.

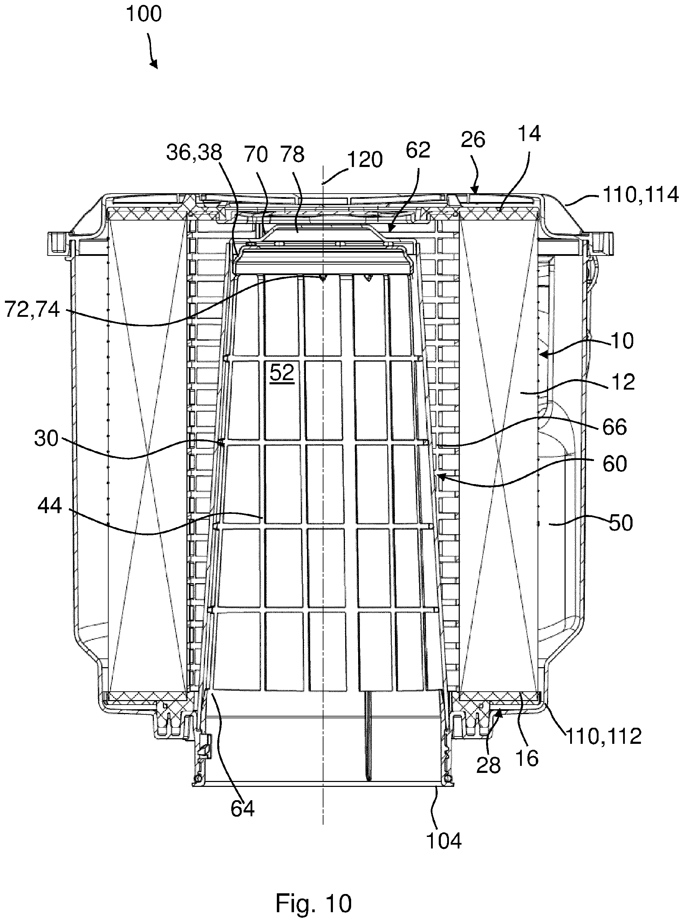

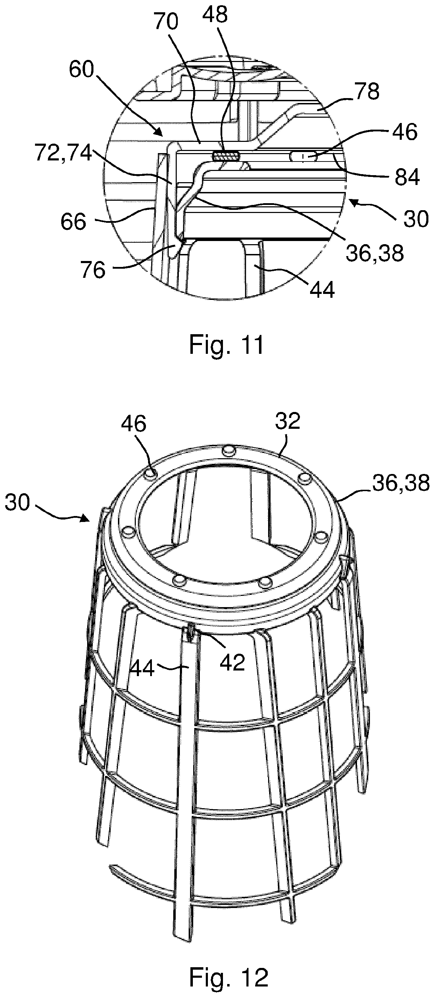

Figur 10 zeigt einen Längsschnitt durch ein Filtersystem 100 zum Filtern eines Fluids nach einem weiteren Ausführungsbeispiel der Erfindung mit einem Sekundärelement 60. In Figur 11 ist dazu eine Ausschnittvergrößerung des Längsschnitts des Filtersystems 100 durch Sekundärelement 60 und Mittelrohr 30 im Bereich der Endscheibe 70 des Sekundärelements 60 und des Kragens 38 des Mittelrohrs 30 dargestellt. Figur 12 zeigt eine isometrische Darstellung des Mittelrohrs 30 des Filtersystems 100 nach Figur 10.

Das Filtersystem 100 ist in seinen wesentlichen Merkmalen gleich dem in den Figuren 1 bis 9 dargestellten Ausführungsbeispiel, weshalb nur auf die Unterschiede eingegangen wird.

Bei dem in den Figuren 10 bis 12 dargestellten Ausführungsbeispiel weist der Kragen 38 des Mittelrohrs 30 in Längsrichtung 120 weisende Abstützelemente 46 auf, welche in bestimmungsgemäß montiertem Zustand des Sekundärelements 30 an einer nach innen gerichteten Gegenhaltefläche 84 der Endscheibe 70 anliegen. Insbesondere kann dabei das Sekundärelement 60 in bestimmungsgemäß montiertem Zustand mittels der Abstützelemente 46 in Längsrichtung 120 verspannt sein, da die Abstützelemente 46 von der Innenseite des Sekundärelements 60 her an der Gegenhaltefläche 84 anliegen. Die Abstützelemente 46 sind bei diesem Ausführungsbeispiel als runde Noppen ausgebildet, welche am Ende 32 des Mittelrohrs 30 auf dem Kragen 38 angeordnet sind.

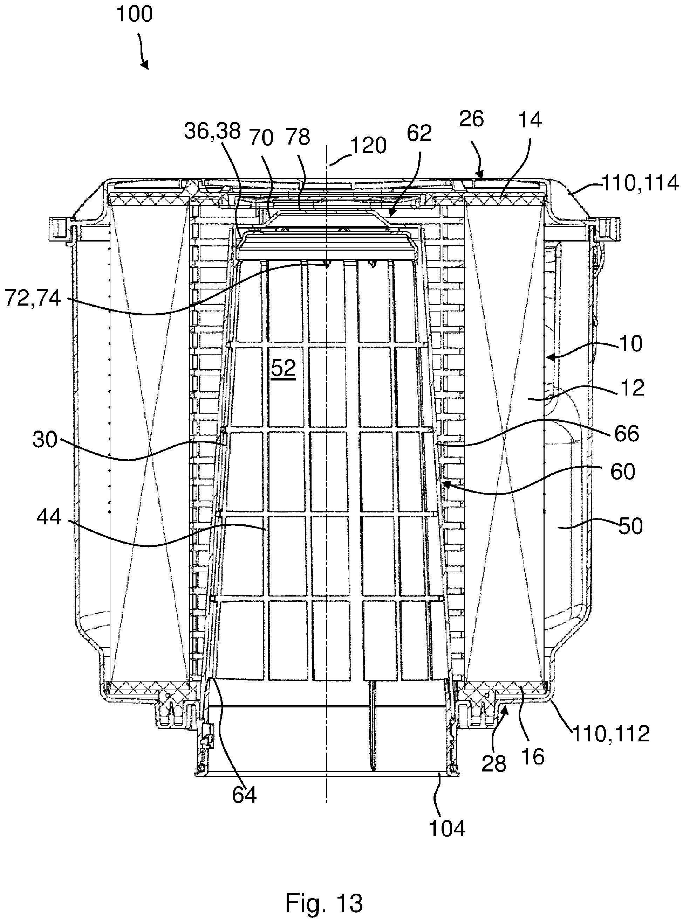

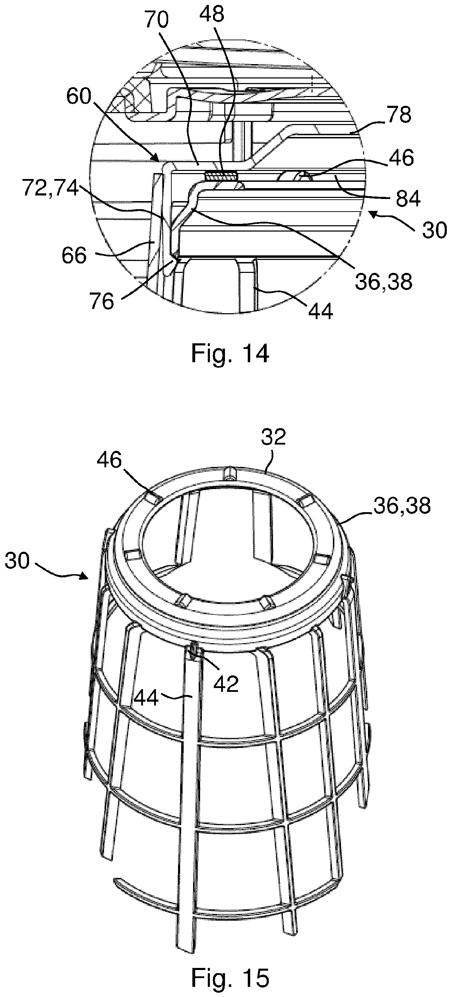

Figur 13 zeigt einen Längsschnitt durch ein Filtersystem 100 zum Filtern eines Fluids nach einem weiteren Ausführungsbeispiel der Erfindung mit einem Sekundärelement 60. **In** Figur 14 ist dazu eine Ausschnittvergrößerung des Längsschnitts des Filtersystems 100 durch Sekundärelement 60 und Mittelrohr 30 im Bereich der Endscheibe 70 des Sekundärelements 60 und des Kragens 38 des Mittelrohrs 30 dargestellt. Figur 15 zeigt eine isometrische Darstellung des Mittelrohrs 30 des Filtersystems 100 nach Figur 13.

Das Filtersystem 100 ist in seinen wesentlichen Merkmalen gleich dem in den Figuren 10 bis 12 dargestellten Ausführungsbeispiel, weshalb nur auf die Unterschiede eingegangen wird.

Bei dem in den Figuren 13 bis 15 dargestellten Ausführungsbeispiel weist der Kragen 38 des Mittelrohrs 30 in Längsrichtung 120 weisende Abstützelemente 46 auf, welche mit dreieckigem Querschnitt keilförmig ausgebildet und in radialer Richtung angeordnet sind.

### Bezugszeichen

- 10: Filterelement
- 12: Filterbalg
- 14: erste Endscheibe
- 16: zweite Endscheibe
- 26: Stirnseite
- 28: Stirnseite
- 30: Mittelrohr
- 32: Ende
- 34: Ausbuchtung
- 36: zweite Verbindungseinrichtung
- 38: Kragen
- 40: Abmessung
- 42: Abweiselement
- 43: Steuerfläche
- 44: Versteifungsrippe
- 46: Abstützelement
- 48: Vorspannungselement
- 50: Rohfluidbereich
- 52: Reinfluidbereich
- 60: Sekundärelement
- 62: Ende
- 64: Ende
- 66: Filtermedium
- 70: Endscheibe
- 72: erste Verbindungseinrichtung
- 74: Rastelement
- 76: Rasthaken
- 78: Ausbuchtung
- 80: Längsrichtung Sekundärelement
- 82: Abstand
- 84: Gegenhaltefläche
- 100: Filtersystem
- 102: Einlassstutzen
- 104: Auslassstutzen
- 110: Filtergehäuse
- 112: Gehäuseunterteil
- 114: Gehäuseoberteil
- 118: Verbindungselement
- 120: Längsrichtung Filtersystem

## Patentansprüche

1. Sekundärelement (60) zur Verwendung in einem Filtersystem (100) mit einer Längsrichtung (80) und zwei sich entlang der Längsrichtung (80) gegenüber liegenden Enden (62, 64), umfassend ein um die Längsrichtung (80) angeordnetes Filtermedium (66),
wobei eines der Enden (64) offen und das gegenüberliegende Ende (62) mit einer geschlossenen Endscheibe (70) dicht abgeschlossen ist,
wobei die Endscheibe (70) eine erste Verbindungseinrichtung (72) aufweist, die bei bestimmungsgemäßer Montage zum Zusammenwirken mit einer komplementären zweiten Verbindungseinrichtung (36) eines Mittelrohrs (30) des Filtersystems (100) vorgesehen ist, um das Sekundärelement (60) auf dem Mittelrohr (30) zu fixieren,
wobei die erste Verbindungseinrichtung (72) Rastelemente (74) mit nach radial innen gerichteten Rasthaken (76) aufweist, welche auf einem äußeren Umfang der Endscheibe (70) verteilt angeordnet sind,
wobei das Filtermedium (66) die Rastelemente (74) umgibt,
und wobei ein Abstand (82) zweier direkt benachbarter Rastelemente (74) entlang des äußeren Umfangs der Endscheibe (70) größer ist als eine Abmessung (40) in Umfangsrichtung eines an einem Kragen (38) des Mittelrohrs (30) angeordneten Abweiselements (42), das an dem Kragen (38) des Mittelrohrs (30) nach radial außen weisend angeordnet ist.

2. Sekundärelement nach Anspruch 1, wobei die Endscheibe (70) eine Ausbuchtung (78) aufweist, welche in der Längsrichtung (80) nach außen ragt.

3. Sekundärelement nach Anspruch 1 oder 2, wobei die Rastelemente (74) auf dem äußeren Umfang der Endscheibe (70) gruppiert verteilt sind, insbesondere wobei jeweils ein Rastelement (74) zu einem auf einer Seite entlang des Umfangs direkt benachbarten Rastelement (74) einen kleineren Abstand (82) aufweist als zu einem auf der anderen Seite entlang des Umfangs benachbarten Rastelement (74).

4. Sekundärelement nach einem der vorhergehenden Ansprüche, wobei die Endscheibe (70) mit dem Filtermedium (66) fest verbunden ist, insbesondere verschweißt oder verklebt oder angespritzt ist.

5. Filtersystem (100) zum Filtern eines Fluids umfassend
- ein Gehäuse (110),
- einen am Gehäuse (110) angeordneten Einlassstutzen (102) zum Zuführen eines zu filternden Fluids, insbesondere Luft,
- einen am Gehäuse (110) angeordneten Auslassstutzen (104) zur Ableitung des gefilterten Fluids, insbesondere ein in einer Längsrichtung (120) zentral angeordneter Auslassstutzen (104),
- wenigstens ein Filterelement (10), das zwischen Einlassstutzen (102) und Auslassstutzen (104) angeordnet ist,
- ein im Inneren des Gehäuses (110) entlang der Längsrichtung (120) angeordnetes Mittelrohr (30) zur Aufnahme eines Filterelements (10),
wobei das Mittelrohr (30) als Träger eines Sekundärelements (60) vorgesehen ist, welches im Inneren des Filterelements (10) angeordnet ist,
wobei das Sekundärelement (60) an einem Ende (62) eine geschlossene Endscheibe (70) aufweist,
wobei das Sekundärelement (60) und das Mittelrohr (30) jeweils zueinander komplementäre Verbindungseinrichtungen (72, 36) aufweisen, mit denen sie an einem ihrer Enden (62, 32) miteinander verbindbar sind,
wobei die erste Verbindungseinrichtung (72) des Sekundärelements (60) Rastelemente (74) aufweist, welche auf einem äußeren Umfang der Endscheibe (70) verteilt angeordnet sind und nach radial innen gerichtete Rasthaken (76) aufweisen,
wobei die zweite Verbindungseinrichtung (36) des Mittelrohrs (30) einen umlaufenden Kragen (38) aufweist,
wobei die Rastelemente (74) in einem bestimmungsgemäß montierten Zustand mittels der Rasthaken (76) mit dem Kragen (38) des Mittelrohrs (30) verrastet sind und das Sekundärelement (60) in der Längsrichtung (120) des Filtersystems (100) fixieren,
wobei das Mittelrohr (30) wenigstens ein an dem Kragen (38) nach radial außen weisend angeordnetes Abweiselement (42) aufweist, und wobei ein Abstand (82) zweier direkt benachbarter Rastelemente (74) entlang des äußeren Umfangs der Endscheibe (70) größer ist als eine Abmessung (40) in Umfangsrichtung des am Kragen (38) angeordneten Abweiselements (42).

6. Filtersystem nach Anspruch 5, wobei die zueinander komplementären Verbindungseinrichtungen (72, 36) zerstörungsfrei lösbar ausgebildet sind.

7. Filtersystem nach Anspruch 5 oder 6, wobei das Sekundärelement (60) das Mittelrohr (30) am geschlossenen Ende (62) axial überragt.

8. Filtersystem nach einem der Ansprüche 5 bis 7, wobei das Mittelrohr (30) an seinem Ende (32), an dem die zweite Verbindungseinrichtung (36) angeordnet ist, eine Ausbuchtung (34), insbesondere eine flexible Rippenstruktur, aufweist, die formkonform mit einer Ausbuchtung (78) des Sekundärelements (60) ausgebildet ist.

9. Filtersystem nach Anspruch 8, wobei die Ausbuchtung (78) des Sekundärelements (60) kegelstumpfförmig ausgebildet ist und insbesondere formkonform zu der kegelstumpfförmigen Ausbuchtung (34) des Mittelrohrs (30) ausgebildet ist.

10. Filtersystem nach einem der Ansprüche 5 bis 9, wobei die Rastelemente (74) auf dem äußeren Umfang der Endscheibe (70) gruppiert verteilt sind, insbesondere wobei jeweils ein Rastelement (74) zu einem auf einer Seite entlang des Umfangs direkt benachbarten Rastelement (74) einen kleineren Abstand (82) aufweist als zu einem auf der anderen Seite entlang des Umfangs benachbarten Rastelement (74).

11. Filtersystem nach einem der Ansprüche 5 bis 10, wobei das Abweiselement (42) an einer Umfangsposition einer Versteifungsrippe (44) des Mittelrohrs (30) angeordnet ist.

12. Filtersystem nach einem der Ansprüche 5 bis 11, wobei der Kragen (38) des Mittelrohrs (30) in Längsrichtung (120) weisende Abstützelemente (46) aufweist, welche in bestimmungsgemäß montiertem Zustand des Sekundärelements (30) an einer nach innen gerichteten Gegenhaltefläche (84) der Endscheibe (70) anliegen, insbesondere wobei das Sekundärelement (60) in bestimmungsgemäß montiertem Zustand mittels der Abstützelemente (46) in Längsrichtung (120) verspannt ist.

13. Filtersystem nach einem der Ansprüche 5 bis 12, wobei das Sekundärelement (60) an dem Mittelrohr (30) unter Vorspannung festgelegt ist, insbesondere wobei ein Vorspannungselement (48) zwischen Sekundärelement (60) und Mittelrohr (30) angeordnet ist, insbesondere zwischen der Endscheibe (70) des Sekundärelements (60) und dem Kragen (38) des Mittelrohrs (30) angeordnet ist.

14. Filtersystem nach einem der Ansprüche 5 bis 13, wobei das Filterelement (10) an seiner auslassstutzenseitigen Stirnseite (28) radial nach innen abdichtet.

## Claims

1. A secondary element (60) for being used in a filter system (100) having a longitudinal direction (80) and two opposite ends (62, 64) along the longitudinal direction (80), comprising a filter medium (66) disposed around the longitudinal direction (80),
wherein one of the ends (64) is open and the opposing end (62) is tightly sealed with a closed end disc (70),
wherein the end disc (70) features a first connecting means (72) which, when assembled in accordance with the intended use, is provided to interact with a complementary second connecting means (36) of a central tube (30) of the filter system (100) in order to fix the secondary element (60) on the central tube (30),
wherein the first connecting means (72) features snap-fit elements (74) with radially inwardly directed snap-fit hooks (76) disposed in a distributed manner over an outer circumference of the end disc (70),
wherein the filter medium (66) surrounds the snap-fit elements (74),
and wherein a distance (82) between two directly adjacent snap-fit elements (74) along the outer circumference of the end disc (70) is larger than a dimension (40) in the circumferential direction of a deflector element (42) disposed on a collar (38) of the central tube (30), said deflector element being disposed on the collar (38) of the central tube (30) so as to point outwardly in the radial direction.

2. The secondary element according to claim 1, wherein the end disc (70) features a bulge (78) that projects outwardly in the longitudinal direction (80).

3. The secondary element according to claim 1 or 2, wherein the snap-fit elements (74) are distributed in groups on the outer circumference of the end disc (70), in particular wherein a snap-fit element (74) respectively features a smaller distance (82) to a snap-fit element (74) directly adjacent on one side along the circumference than to a snap-fit element (74) adjacent on the other side along the circumference.

4. The secondary element according to one of the preceding claims, wherein the end disc (70) is firmly connected to the filter medium (66), in particular welded or glued or injection-molded.

5. A filter system (100) for filtering a fluid, comprising
- a housing (110),
- an inlet port (102) disposed on the housing (110) for supplying a fluid to be filtered, in particular air,
- an outlet port (104) disposed on the housing (110) for discharging the filtered fluid, in particular an outlet port (104) disposed centrally in the longitudinal direction (120),
- at least one filter element (10) disposed between inlet port (102) and outlet port (104),
- a central tube (30) disposed inside the housing (110) along a longitudinal direction (120) for accommodating a filter element (10),
wherein the central tube (30) is provided as a support for a secondary element (60) disposed inside the filter element (10),
wherein the secondary element (60) features a closed end disc (70) at one end (62),
wherein the secondary element (60) and the central tube (30), respectively, feature mutually complementary connecting means (72, 36) allowing them to be connected to one another at one of their ends (62, 32),
wherein the first connecting means (72) of the secondary element (60) features snap-fit elements (74) disposed so as to be distributed on an outer circumference of the end disc (70) and featuring snap-fit hooks (76) directed radially inwards,
wherein the second connecting means (36) of the central tube (30) features a circumferential collar (38),
wherein the snap-fit elements (74), when assembled in accordance with the intended use, are snap-fitted to the collar (38) of the central tube (30) using the snap-fit hooks (76) and fixing the secondary element (60) in the longitudinal direction (120) of the filter system (100),
wherein the central tube (30) features at least one deflector element (42) disposed on the collar (38) and pointing radially outwardly, and wherein a distance (82) between two directly adjacent snap-fit elements (74) along the outer circumference of the end disc (70) is larger than a dimension (40) in the circumferential direction of a deflector element (42) disposed on the collar (38).

6. The filter system according to claim 5, wherein the connecting means (72, 36) complementary to each other are designed in a non-destructive manner.

7. The filter system according to claim 5 or 6, wherein the secondary element (60) projects axially beyond the central tube (30) at the closed end (62).

8. The filter system according to one of the claims 5 to 7, wherein the central tube (30) features at its end (32), at which the second connecting means (36) is disposed, a bulge (34), in particular a flexible rib structure, designed to match the shape of a bulge (78) of the secondary element (60).

9. The filter system according to claim 8, wherein the bulge (78) of the secondary element (60) has a frusto-conical shape and, in particular, is designed to be conformal in shape with the frusto-conical bulge (34) of the central tube (30).

10. The filter system according to one of the claims 5 to 9, wherein the snap-fit elements (74) are distributed in groups on the outer circumference of the end disc (70), in particular wherein a snap-fit element (74) respectively features a smaller distance (82) to a snap-fit element (74) directly adjacent on one side along the circumference than to a snap-fit element (74) adjacent on the other side along the circumference.

11. The filter system according to one of the claims 5 to 10, wherein the deflector element (42) is disposed at a circumferential position of a reinforcing rib (44) of the central tube (30).

12. The filter system according to one of the claims 5 to 11, wherein the collar (38) of the central tube (30) features support elements (46) pointing in the longitudinal direction (120), which, when the secondary element (30) is assembled in accordance with the intended use, rest against an inwardly directed counter-holding surface (84) of the end disc (70), in particular wherein the secondary element (60), when assembled in accordance with the intended use, is tensioned in the longitudinal direction (120) using the support elements (46).

13. The filter system according to one of the claims 5 to 12, wherein the secondary element (60) is fixed to the central tube (30) under pretension, in particular wherein a pretensioning element (48) is disposed between the secondary element (60) and the central tube (30), in particular between the end disc (70) of the secondary element (60) and the collar (38) of the central tube (30).

14. The filter system according to one of the claims 5 to 13, wherein the filter element (10) seals radially inwardly at its front face (28) on the outlet port side.

## Revendications

1. Elément secondaire (60) destiné à être utilisé dans 6 système de filtre (100) ayant un sens longitudinal (80) et deux extrémités (62, 64) opposées l'une à l'autre le long du sens longitudinal (80), comprenant un milieu filtrant (66) disposé autour du sens longitudinal (80),
l'une des extrémités (64) étant ouverte et l'extrémité opposée (62) étant hermétiquement fermée par un disque d'extrémité fermé (70),
le disque d'extrémité (70) présentant un premier dispositif de raccordement (72) qui, lors d'un montage conformément à l'utilisation prévue, est conçu pour coopérer avec un deuxième dispositif de raccordement complémentaire (36) d'un tube central (30) du système de filtre (100) afin de fixer l'élément secondaire (60) sur le tube central (30),
le premier dispositif de raccordement (72) présentant des éléments d'encliquetage (74) avec des crochets d'encliquetage (76) orientés radialement vers l'intérieur, qui sont disposés de manière répartie sur une circonférence extérieure du disque d'extrémité (70),
le milieu filtrant (66) entourant les éléments d'encliquetage (74),
et la distance (82) entre deux éléments d'encliquetage (74) directement adjacents le long de la circonférence extérieure du disque d'extrémité (70) étant supérieure à une dimension (40) dans le sens circonférentiel d'un élément déflecteur (42) disposé sur une collerette (38) du tube central (30), lequel élément déflecteur étant disposé sur la collerette (38) du tube central (30) en étant orienté radialement vers l'extérieur.

2. Elément secondaire selon la revendication 1, le disque d'extrémité (70) présentant un renflement (78) qui dépasse vers l'extérieur dans le sens longitudinal (80).

3. Élément secondaire selon la revendication 1 ou 2, les éléments d'encliquetage (74) étant répartis de manière groupée sur la circonférence extérieure du disque d'extrémité (70), notamment un élément d'encliquetage (74), respectivement, présentant un écartement (82) plus petit par rapport à un élément d'encliquetage (74) directement adjacent sur un côté le long de la circonférence qu'envers un élément d'encliquetage (74) adjacent sur l'autre côté le long de la circonférence.

4. Élément secondaire selon l'une quelconque des revendications précédentes, le disque d'extrémité (70) est relié de manière fixe, notamment soudé ou collé ou moulé par injection, au milieu filtrant (66).

5. Système de filtre (100) destiné à filtrer un fluide, comprenant
- un boîtier (110),
- une tubulure d'admission (102) disposée sur le boîtier (110) et destinée à introduire un fluide à filtrer, notamment de l'air,
- une tubulure d'évacuation (104) disposée sur le boîtier (110) et destinée à évacuer le fluide filtré, notamment une tubulure d'évacuation (104) disposée de manière centrale en sens longitudinal (120),
- au moins un élément filtrant (10) disposé entre la tubulure d'admission 102) et la tubulure d'évacuation (104),
- un tube central (30) disposé à l'intérieur du boîtier (110) le long du sens longitudinal (120) pour recevoir un élément filtrant (10),
le tube central (30) étant conçu en tant que support d'un élément secondaire (60) disposé à l'intérieur de l'élément filtrant (10),
l'élément secondaire (60) présentant un disque d'extrémité fermé (70) à une extrémité (62),
l'élément secondaire (60) et le tube central (30) présentant chacun des dispositifs de raccordement mutuellement complémentaires (72, 36) permettant de les relier l'un à l'autre à l'une de leurs extrémités (62, 32),
le premier dispositif de raccordement (72) de l'élément secondaire (60) présentant des éléments d'encliquetage (74) disposés de manière répartie sur une circonférence extérieure du disque d'extrémité (70) et présentant des crochets d'encliquetage (76) orientés radialement vers l'intérieur,
le deuxième dispositif de raccordement (36) du tube central (30) présentant une collerette circonférentielle (38),
les éléments d'encliquetage (74) étant, dans un état monté conformément à l'utilisation prévue, encliqueté sur la collerette (38) du tube central (30) utilisant les crochets d'encliquetage (76) et fixant l'élément secondaire (60) dans le sens longitudinal (120) du système de filtre (100),
le tube central (30) présentant au moins un élément déflecteur (42) orienté radialement vers l'extérieur sur la collerette (38), et la distance (82) entre deux éléments d'encliquetage (74) directement adjacents le long de la circonférence extérieure du disque d'extrémité (70) étant supérieure à une dimension (40) dans le sens circonférentiel de l'élément déflecteur (42) disposé sur la collerette (38).

6. Système de filtre selon la revendication 5, les dispositifs de raccordement (72, 36) complémentaires l'un par rapport à l'autre étant détachables de manière non destructive.

7. Système de filtre selon la revendication 5 ou 6, l'élément secondaire (60) dépassant axialement le tube central (30) à l'extrémité fermée (62).

8. Système de filtre selon l'une quelconque des revendications 5 à 7, le tube central (30) présentant à son extrémité (32), à laquelle est disposé le deuxième dispositif de raccordement (36), un renflement (34), notamment une structure nervurée flexible, qui est réalisée de manière à correspondre à un renflement (78) de l'élément secondaire (60).

9. Système de filtre selon la revendication 8, le renflement (78) de l'élément secondaire (60) étant de forme tronconique et notamment réalisé de manière à correspondre à la forme du renflement tronconique (34) du tube central (30).

10. Système de filtre selon l'une quelconque des revendications 5 à 9, les éléments d'encliquetage (74) étant répartis de manière groupée sur la circonférence extérieure du disque d'extrémité (70), notamment un élément d'encliquetage (74), respectivement, présentant un écartement (82) plus petit par rapport à un élément d'encliquetage (74) directement adjacent sur un côté le long de la circonférence qu'envers un élément d'encliquetage (74) adjacent sur l'autre côté le long de la circonférence.

11. Système de filtre selon l'une quelconque des revendications 5 à 10, l'élément déflecteur (42) étant disposé à une position circonférentielle d'une nervure de renfort (44) du tube central (30).

12. Système de filtre selon l'une quelconque des revendications 5 à 11, la collerette (38) du tube central (30) présentant des éléments de support (46) orientés dans le sens longitudinal (120), qui, lorsque l'élément secondaire (30) est monté conformément à l'utilisation prévue, reposent sur une surface de contre-appui (84) du disque d'extrémité (70) dirigée vers l'intérieur, notamment l'élément secondaire (60), lorsqu'il est monté conformément à l'utilisation prévue, étant serré dans le sens longitudinal (120) par un procédé utilisant les éléments de support (46).

13. Système de filtre selon l'une quelconque des revendications 5 à 12, l'élément secondaire (60) étant fixé au tube central (30) sous sollicitation, notamment un élément de précontrainte (48) étant disposé entre l'élément secondaire (60) et le tube central (30), notamment entre le disque d'extrémité (70) de l'élément secondaire (60) et la collerette (38) du tube central (30).

14. Système de filtre selon l'une quelconque des revendications 5 à 13, dans lequel l'élément filtrant (10) étanche en sens radial vers l'intérieur à sa face frontale (28) côté tubulure d'évacuation.
